Europäisches Patentamt

European Patent Office

Office européen des brevets

(19)

(11) Veröffentlichungsnummer: **0 154 877**
**B1**

(12) **EUROPÄISCHE PATENTSCHRIFT**

(45) Veröffentlichungstag der Patentschrift: **17.10.90**

(21) Anmeldenummer: **85102044.6**

(22) Anmeldetag: **25.02.85**

(51) Int. Cl.⁵: **E 04 C 2/26,** E 04 C 2/32, B 32 B 3/20

(54) **Leichtbaukonstruktionen hoher Festigkeit und Formsteifigkeit.**

(30) Priorität: **09.03.84 DE 3408776**

(43) Veröffentlichungstag der Anmeldung:
**18.09.85 Patentblatt 85/38**

(45) Bekanntmachung des Hinweises auf die
Patenterteilung:
**17.10.90 Patentblatt 90/42**

(84) Benannte Vertragsstaaten:
**AT CH DE FR GB IT LI NL SE**

(56) Entgegenhaltungen:
**FR-A-1 495 245**
**FR-A-2 117 808**

(73) Patentinhaber: **BAYER AG**
**D-5090 Leverkusen 1 Bayerwerk (DE)**

(72) Erfinder: **Müller, Hans**
**Albert-Einstein-Strasse 63**
**D-5090 Leverkusen 1 (DE)**
Erfinder: **Preis, Lothar, Dr.**
**August-Kierspel-Strasse 42**
**D-5060 Bergisch-Gladbach 2 (DE)**

EP 0 154 877 B1

**Beschreibung**

Die Erfindung betrifft ein mehrdimensional gekrümmtes Sandwich-Element aus einem Kern und zwei Hüllflächen, wobei im Kern Abstand voneinander aufweisende Hohlprofile aus faserhaltigem Werkstoff nebeneinander angeordnet sind und der im Kern um die Hohlprofile verbleibende Raum mit einer Vergußstützmasse ausgefüllt ist.

Leichtbaukonstruktionen in Form von Sandwich-Elementen mit mehrdimensional gekrümmten Hüllflächen aus faserverstärkten Reaktionsharzen sind bekannt. Aus solchen Sandwich-Elementen können beispielsweise Bootsrümpfe aufgebaut sein, und am Beispiel des Bootsbaues sind Nachteile der bisherigen Materialien leicht ersichtlich. Bei einer Art der Herstellung werden Bootsrümpfe aus Reaktionsharz-imprägnierten Glasgeweben bzw. Matten im Laminierverfahren aus mehreren Lagen in einer Negativform aufgebaut. Die erforderliche Wandstärke des Laminats wird durch die gewünschte Steifigkeit der Konstruktion bedingt. Diese Bauweise ist aufwendig, weil zur Gewinnung der eigenttlichen Form zunächst ein Positivemodell in voller Größe gefertigt werden muß, von dem in einem weiteren Arbeitsgang die eigentliche Arbeitsform abgenommen wird. Die Werkzeugherstellung ist zeit- und kostenintensiv und daher im allgemeinen nur bei anschließender Serienproduktion gerechtfertigt. Zur Erhöhung der Wirtschaftlichkeit bei kleinen Stückzahlen wird vorgeschlagen, anstelle der Laminierform eine leichte hölzerne Unterconstruction aus leichten formgebenden Mallen zu verwenden. Ein derartiges Mallengerüst wird mit Glasgeweben, die die Reaktionsharz-imprägnierten und ausgehärteten Glasfasertäbe als Tragelemente enthalten, beplankt und nach dem Verspannen mit Reaktionsharz imprägniert. Nach Aushärtung dieser konturgebenden Beplankung erfolgt der weitere Laminataufbau in üblicher Weise Schicht für Schicht mit Glasfasermatten und/oder -geweben, bis die gewünschte Wandstärke erreicht ist.

Nach dieser Methode lassen sich zwar Körper mit mehrdimensional gekrümmten Flächen herstellen, dagegen nicht die Festigkeitseigenschaften faserverstärkter Kunststoffe optimal nutzen, da die Laminatwandstärke und damit das Gewicht des Körpers nicht von der notwendigen Festigkeit, sondern der gewünschten Steifigkeit des Körpers bestimmt wird.

Eine hohe Formsteifigkeit bei relative niedrigem Gesamtgewicht läßt sich dadurch realisieren, daß man mäßig dicke Laminate mit versteifenden Elementen wie Längs- und Querspanten oder Holmen kombiniert. Typisch für solche Baumethoden sind z.B. Bootskörper aus in Negativformen hergestellten GFK-Laminaten, sowie alle Bootsrümpfe aus Stahl und Aluminium.

Eine im Hinblick auf die bessere Nutzung der Werkstoffeigenschaften vorteilhaftere Methode, um zu hoher Formsteifigkeit bei auf Biegung beanspruchten Körpern zu kommen, besteht darin, Schichten aus zug- und druckfesten Werkstoffen auf Abstand haltende, ausreichend druckfeste Zwischenschichten so aufzubringen, daß die bei der mechanischen Beanspruchung des Gesamtquerschnitts in der Übergangszone Außenschicht/Zwischenschicht auftretenden Schubkräfte aufgenommen werden können. Solche Sandwich-Strukturen sind bei hoher Biegesteifigkeit besonders leicht, und es sind im allgemeinen keine zusätzlichen aussteifenden Bauelemente erforderlich.

Es sind Sandwich-Elemente aus Hartschäumen und Deckschichten aus GFK-Laminaten bekannt, die sowohl in Hüll- als auch Füllbauweise hergestellt werden können. Während bei der Hüllbauweise vorgefertigte Schaumteile mit den Laminaten geplankt werden, geht man bei der Füllbauweise im allgemeinen von zwei Außenlaminatschalen aus, die in einem zweiten Arbeitsgang ausgeschäumt werden. In beiden Fällen werden relativ aufwendige Werkzeuge benötigt, so daß diese Technik nur bei relativ großen Stückzahlen wirtschaftlich ist und darüber hinaus nur Körper begrenzter Größe zuläßt.

Die Herstellung von Sandwich-Konstruktionen ohne Anwendung von Formwerkzeugen erlaubt die RFK-Bauweise (RFK, eingetragenes Warenzeichen, ein Kurzzeichen für den Begriff "Rohr-Fiber-Kunststoff"). Bei diesem Verfahren werden auf quer angeordnete Form- und Konturgeber Längsgerichtete Hohlprofile aus thermoplastischen Kunststoffen lückenlos aneinandergereiht aufgebracht und anschließend beidseitig mit Kunstharzlaminaten beschichtet.

Der Vorteil dieser Bauweise liegt darin, daß Raumkörper erheblicher Größe mit merklich verringertem Herstellungsaufwand möglich sind. RFK-Sandwich-Elemente sind zwar gewichtsgleichen Laminaten hinsichtlich der Biegefestigkeit überlegen, die realisierbaren Formkörpergrößen sind aber begrenzt. Die formgebenden Rohre leisten praktisch keinen Beitrag zur Festigkeit; sie besitzen auch nur eine relativ niedrige Druckfestigkeit. Bei örtlich begrenzter, längerer oder dauernder Lasteinwirkung, insbesondere bei höherer Temperatur, kann es infolge Kriechens zu bleibenden Verformungen der Sandwich-Struktur kommen. Probleme entstehen auch bei dynamischer Beanspruchung, da das stark unterschiedliche Verhalten von Kern- und Deckschichten zu Ablösungserscheinungen führen.

Aus FR—A—2 117 808 ist ein Wandelement zur thermischen und akustischen Isolierung von Räumen mit einer Sandwichstruktur aus einem Kern und zwei Hüllflächen bekannt, wobei im Kern Hohlprofile aus faserhaltigem Werkstoff vorhanden sind, die mit Abstand nebeneinander liegen und wobei der verbleibende Hohlraum im Kern um die Hohlprofile mit einer diese Hohlprofile stützenden Vergußmasse ausgefüllt ist. Dabei handelt es sich um ebene Elemente bzw. keine solchen, welche mehrdimensional gekrümmte Hüllflächen aufweisen. Für die Aufnahme hoher Kräfte ist diese Konstruktion trotz der Faserarmierung der Hohlprofile nicht geeignet.

Aufgabe der Erfindung ist es, ein mehrdimensional gekrümmte Sandwichelement bereitzustellen, welches als beliebig großes, selbsttragendes gekrümmtes Wandelement, hohe Belastbarkeit und Formsteifigkeit erlaubt und zu dessen Herstellung es keiner aufwendigen Formwerkzeuge bedarf.

Diese Aufgabe wird dadurch gelöst, daß die Hohlprofile aus Faserverbundwerkstoff mit unidirektional orientierten Glasfasern bestehen, wobei die Zugfestigkeit der Hohlprofile mindestens 1.000 N/mm², bezogen auf den tragenden Querschnitt, und die Druckfestigkeit der Vergußmasse mindestens 15 N/mm² beträgt.

Generell ist die Druckfestigkeit der Gußmasse auf die Hohlprofile abgestimmt. Die Druckfestigkeit der Vergußmasse soll mindestens so hoch sein wie die Querdruckfestigkeit der Hohlprofile. Die allseitige homogene Stützung der Hohlprofile ist wesentlich für die Nutzung ihrer Festigkeits- und Steifigkeitseigenschaften. Der Mindestabstand der Hohlprofile liegt bei 1 mm. Vorzugsweise sollte der Abstand zwischen zwei Hohlprofilen nicht größer als der dreifache Durchmesser eines Hohlprofils sein. Die seitliche Laminat-Überdeckung bei runden Hohlprofilen soll mindestens 3 mm betragen.

Das neue Sandwichelement zeichnet sich durch hohe Festigkeit und Steifigkeit bei besonders niedrigem spezifischen Gewicht aus. Es läßt sich aber dennoch ohne Schäden stark verformen und verhält sich bei Schlagbeanspruchung besonders günstig. Ein wesentlicher Vorteil ist auch darin zu sehen, daß die formgebenden Hohlprofile im Gegensatz zu den bekannten Sandwich-Stützkernen, wie Schäume, Waben oder Thermoplastrohre, entscheidend zur Festigkeit und Steifigkeit der Gesamtstruktur beitragen.

Das neue Sandwichelement ist einfach und ohne aufwendige Formwerkzeuge herstellbar, erlaubt aber vielfältige Gestaltungsmöglichkeiten, da die flexiblen, unvergossenen Hohlprofile jeder Raumform gut angepaßt werden können. Es können Raumkörper realisiert werden, deren Größe bei vergleichbarer Festigkeit und Steifigkeit bislang nur in Metallbauweise aber mit höherem Gewicht möglich war. Darüber hinaus besitzen die neuen Sandwich elemente ein erheblich besseres Wärme- und Schalldämmverhalten als entsprechende Metallkonstruktionen.

Die Fertigung von Gegenständen mit dem neuen Sandwich-element ist beispielhaft für die Herstellung einer Bootsschale beschrieben.

Man erzeugt die gewünschte Kontur mit einem einfachen Mallengerüst aus Holzteilen, auf dessen Außenseite die vorzugsweise runden flexiblen Hohlprofile befestigt werden. Die Abstände zwischen den einzelnen Hohlprofilen werden von der gewünschten Tragfähigkeit bestimmt. Sie liegen bevorzugt zwischen dem 1/100 bis 3-fachen Profildurchmesser. Nach Ausrichtung und Fixierung der Hohlprofile werden die verbleibenden Zwischenräume mit einer Vergußmasse vollständig ausgefüllt und abgezogen, so daß glatte homogene Außenflächen entstehen, Zur Einsparung von Gewicht ist es vorteilhaft, eine Vergußmasse zu verwenden, die beim Aushärten leicht schäumt. Damit die mechanischen Festigkeitswerte voll ausgenutzt werden können, ist auf die Mindestdruckfestigkeit der Vergußmasse zu achten.

Zur Herstellung der neuartigen Sandwichelemente eignen sich hochfeste, inbesondere runde Hohlprofile aus Glasfaserverbundwerkstoff mit unidirektionaler Orientierung der Verstärkungsfasern, wie sie z.B. in DE—OS 2 735 538 beschrieben sind, die für dreidimensionale Bauweise bis zu einem gewissen Grade biegsam sein sollten.

Die tragenden Hohlprofile können auch in Kombination mit anderen Kernmaterialien wie z.B. Balsaholz- oder Hartschaumstoffprofilen verwendet werden, was zu einer weiteren Reduktion des Gesamtgewichts und/oder einer Verbesserung der Wirtschaftlichkeit führen kann.

Zum Ausfüllen der Zwischenräume zwischen den Hohlprofilen kommen alle spachtelfähigen Reaktionsharzmassen in Betracht, die ausreichende Druckfestigkeit und gute Haftung zu den Hohlprofilen und Laminatschichten bestizen, vorzugsweise schäumfähige Spachtelmassen oder syntaktische Schäume, die nach dem Aushärten schleifbar sind.

Als Deckschicht kommen Gewebe, Matten oder Gelege aus Vertärkungsfasern, die mit Reaktionsharzen imprägniert und anschließend in bekannter Weise gehärtet werden, in Frage, Anzahl, Typ und Anordnung der Laminatschichten werden entsprechend den gewünschten Anforderungen an Festigkeit und Steifigkeit der Struktur festgelegt.

Ein Sandwichelement ist in der Zeichnung in mehreren Beispielen rein schematisch dargestellt und im Folgenden näher beschrieben. Diese Beispiele stellen Keine Ausführungsart der Erfindung dar, sie esleichtern nur das Verstädnis den Erfindung.

Fig. 1 einen Querschnitt durch ein ebenes plattenartiges Sandwichelement;

Fig. 2 einen Querschnitt durch ein plattenartiges Sandwichelement, welches im Kern neben Hohlprofilen Zwischenstücke aus Balsaholz enthält;

Fig. 3 ein Sandwichelement mit zwei im Winkel von 90° angeordneten Kernlagen aus Hohlprofilen.

Fig. 4 ein Sandwichelement, verbunden mit einem Befestigungselement;

Fig. 5 einen Vergleich der mechanischen Eigenschaften eines neuen Sandwichelements mit einer metallischen Platte herkömmlicher Art.

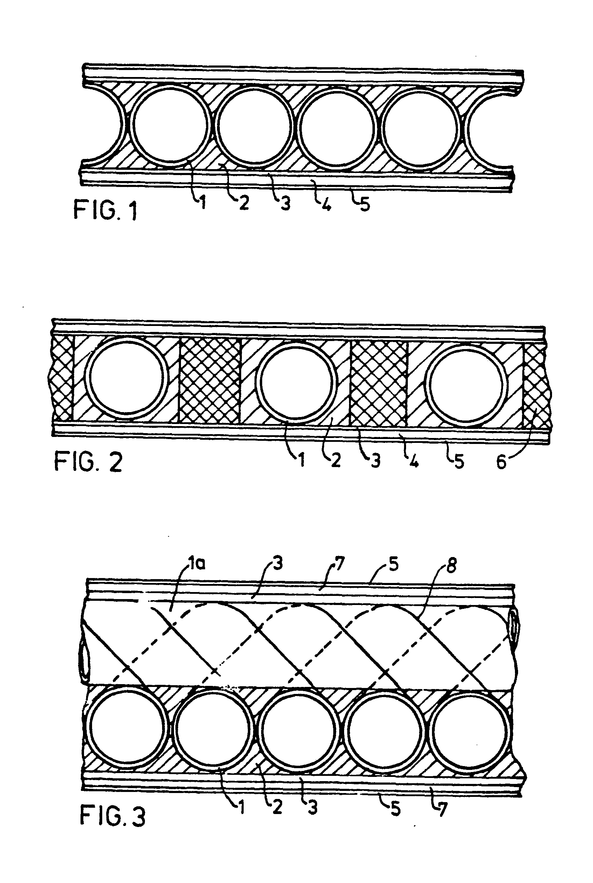

Fig. 1 zeigt den, typischen Aufbau eines ebenen Sandwichelementes. Hohlprofile 1 aus einem Glasfaserverbundwerkstoff mit unidirektionaler Faserorientierung sind homógen in eine druckfeste leichte Spachtelmasse 2 eingebettet. Der Mindestabstand zweier Hohlprofile beträgt 2 mm. Die tragenden Deckschichten sind beidseitig symmetrisch ausgeführt. Sie bestehen aus einem mehrschichtigen Laminat aus einer Lage unidirektionalem Gewebe 3, zwei Lagen Glasfasermatten 4 sowie einer Schutzlackschicht 5.

Das Hohlprofil aus unidirektional orientierten Glasfastersträngen und ungesättigtem Polyesterharz (Isophthalsäurebasis) mit einem Außendurchmesser von 16 mm und einer Wandstärke von 1 mm (Glasfaseranteil 80 Gew.-%) wird zunächst auf einem Holzrahmen fixiert. Dann werden die Zwischenräume zwischen den Hohlprofilen mit einem Spachtel aus Polyesterharz-(Isophthalsäure)-basis, der zur Reduzierung des spezifischen Gewichts 50 Gew.-% Microhohlperlen aus Phenolharz (Microballoons) sowie 2,5% Benzoylperoxid und 0,8% 10%ige Diethylanilinlösung als Härtesystem enthält, ausgefüllt und abgezogen. Verbliebene geringfügige Unebenheiten der Oberfläche werden nach der Aushärtung der Spachtelmasse abgeschliffen. Auf die so erhaltenen glatten Außenflächen werden beidseitig im nächsten Schritt ein Unidirektionalgewebe (Faserrichtung senkrecht zur Orientierung der Rohre) Typ 92253 (Hersteller: Interglas) mit einem Flächengewicht von 490 g/m² und schließlich je zwei Lagen der Glasmatten M 113-10 von je 300 g/m² (Hersteller: Gevetex) unter Verwendung des dem Spachtel zugrunde liegenden Polyesterharzes auflaminiert.

Das Gewicht einer fertigen Sandwichplatte beträgt 15,8 kg/m², die Gesamtdicke 20 mm.

Zur Ermittlung der Tragfähigkeit werden aus der Platte Prüfkörper 800 × 20 mm sowohl in als auch senkrecht zur Orientierung der Fasern der Unidirektionalschicht herausgeschnitten und im Drei-Punkt-Biegeversuch geprüft.

Ergebnisse der Prüfung:
a) Prüfrichtung parallel zur Orientierung der Unidirektionalschicht

| | |
|---|---|
| Beigefestigkeit: | 168 MPa |
| E-Modul: | 8224 MPa |
| Durchbiegung: | 61,8 mm |
| Randfaserdehnung: | 2,1%. |

b) Prüfung senkrecht zur Orientierung der Unidirektionalschicht

| | |
|---|---|
| Biegefestigkeit: | 95,6 MPA |
| E-Modul: | 6177 MPa |
| Durchbiegung: | 42,5 mm |
| Randfaserdehnung: | 1,8%. |

In Fig. 2 ist der Querschnitt eines Sandwichelementes dargestellt, bei dem die Kernlage aus abwechselnd angeordneten aus Hohlprofilen 1 mit unidirektionaler Faserorientierung und Balsaholzprofilen 6 besteht. Der übrige Aufbau entspricht Fig. 1.

Fig. 3 zeigt eine weitere Ausführungsform des Sandwichelementes, bestehend aus zwei Lagen Hohlprofilen 1 und 1a mit unidirektionaler Faserorientierung, die im Winkel von 90° zuueinander angeordnet sind. Die Hohlprofile 1, 1a sind mit Hilfe von harzimprägnierten und gehärteten Glasfasersträngen 8 untereinander verbunden. Die Deckschichten sind aus zwei Lagen eines hochfesten Unidirektionalgewebes 3 und 7 aufgebaut und mit einer schützenden dekorativen Lackschicht 5 versehen.

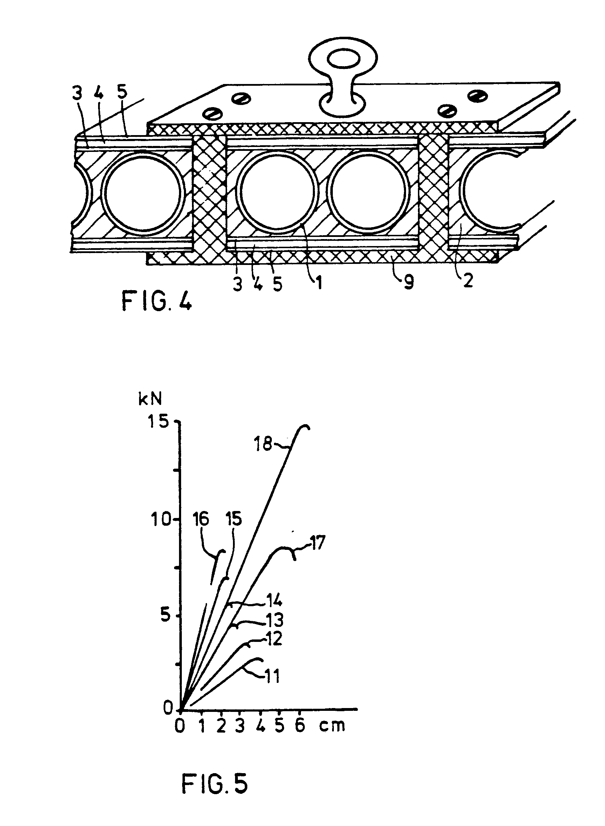

In Fig. 4 ist dargestellt, wie Befestigungselemente 9 bei der Herstellung des neuen Sandwichelementes mit eingebaut werden können. Der Aufbau des Sandwichelementes entspricht Fig. 1.

In Fig. 5 sind mechanische Kennwerte der neuen Sandwichelemente mit einem bekannten metallischen Werstoff verglichen. Auf der Ordinate ist die Biegekraft in kN, auf der Abszisse die Durchbiegung in cm angegeben. Der Auflageabstand betrug 600 mm. Die Kürzeren Kurven 11 bis 16 wurden an einer Aluminiumlegierung AlMgMnF26 gemessen, die Plattendicke nahm von 11 bis 16 von 7 mm jeweils um 1 mm auf 12 mm zu. Die Kurven 17 und 18 kennzeichnen die Eigenschaften der oben beschriebenen Platte. Dabei wurde 17 in Querrichtung und 18 in Längsrichtung des Unidirektionalgewebes 3 belastet.

**Patentanspruch**

Mehrdimensional gekrümmtes Sandwich-Element aus einem Kern und zwei Hüllflächen (3, 4, 5, 7), wobei im Kern Abstand voneinander aufweisende Hohlprofile (1) aus faserhaltigem Werkstoff nebeneinander angeordnet sind und der im Kern um die Hohlprofile (1) verbleibende Raum mit einer Vergußstützmasse (2) ausgefüllt ist, wobei die Hohlprofile (1) aus Faserverbundwerkstoff mit unidirektional orientierten Glasfasern bestehen, wobei die Zugfestigkeit der Hohlprofile (1) mindestens 1 000 N/mm², bezogen auf den tragenden Querschnitt, und die Druckfestigkeit der Vergußmasse (2) mindestens 15 N/mm² beträgt.

**Revendication**

Elément sandwich cintré, à plusieurs dimensions, constitué d'un noyau et de deux surfaces d'enveloppe (3, 4, 5, 7), des profilés creux (1) en matériau fibreux, espacés les uns des autres, étant disposés côte à côte dans le noyau et l'espace restant dans le noyau, autour des profilés creux (1), étant rempli d'une masse de support de scellement (2), les profilés creux (1) étant en matériau composite de fibres avec fibres de verre orientées dans une seule direction et la résistance à la traction des profilés creux (1) étant au moins égale à 1 000 N/mm², rapportée à la section transversale portante, et la résistance à la compression de la masse de scellement (2) étant au moins égale à 15 N/mm².

**Claim**

A multidimensionally curved sandwich element of a core and two shell surfaces (3, 4, 5, 7), in which hollow profiles (1) of a fibre-containing material are arranged adjacent one another at intervals in the core and the space remaining around the hollow profiles (1) in the core is filled with embedding compound (2), the hollow profiles (1) consisting of a fibre composite with unidirectionally oriented glass fibres and the tensile strength of the hollow profiles (1) being at least 1,000 $N/mm^2$, based on the loadbearing cross-section, and the compressive strength of the embedding compound being 15 $N/mm^2$.

FIG. 1

FIG. 2

FIG. 3

FIG. 4

FIG.5

2